# EUROPEAN PATENT APPLICATION

(11) **EP 4 573 928 A1**
(43) Date of publication of application: **25.06.2025**
(21) Application number: 23855138.6
(22) Date of filing: 16.08.2023
(51) Int. Cl.: A23P 20/10, A23L 29/30, A23L 7/104, A23L 25/00, A23L 19/00, A23L 7/126, A23P 10/28

(54) **COATING COMPOSITION COMPRISING KESTOSE**

(30) Priority: 16.08.2022 KR 20220102270
(71) Applicant: Samyang Corporation, Jongno-gu Seoul 03129 (KR)
(72) Inventor: KIM, Yong-In, Yongin-si, Gyeonggi-do 16868 (KR); SEO, Il, Gwangju-si, Gyeonggi-do 12787 (KR); LEE, Seung Mi, Hwaseong-si, Gyeonggi-do 18477 (KR); LEE, Hyeon-Hwa, Seosan-si, Chungcheongnam-do 31938 (KR); LIM, Hye Jin, Suwon-si, Gyeonggi-do 16694 (KR); CHOI, Hyun Shik, Gwangju-si, Gyeonggi-do 12788 (KR)
(74) Representative: Dr. Schön, Neymeyr & Partner Patentanwälte mbB
(86) International application number: PCT/KR2023/012085
(87) International publication number: WO 2024/039171

(57) **Abstract**

The present application relates to a composition for coating the surface of food.

## Description

### [TECHNICAL FIELD]

The present application relates to a coating composition comprising kestose.

### [BACKGROUND ART]

Sucrose is most used as a material for coating a surface of food, and it is often used by mixing a small amount of starch syrup. However, sucrose has been criticized due to its correlation with various adult diseases, as it causes obesity and increases blood sugar through rapid absorption in the body. In the case of food with a sucrose-coated surface, rapid crystallization of sucrose causes the surface to turn white and the appearance reduces the mouthfeel. And excessive surface hardness increases the breakage form minor impacts, and the resulting fragments are small, leading to product damage and reduced marketability during packaging and distribution. Therefore, there is a need to develop to a technology that can reduce the sucrose content while reducing the fragility of food.

### [DISCLOSURE]

### [TECHNICAL PROBLEM]

One embodiment of the present application aims to solve the conventional problems mentioned above by providing a composition for coating the surface of food, which utilizes kestose to coat the food surface, providing a soft texture of food, increasing surface gloss, and preventing breakage.

The composition for coating according to one embodiment of the present application can be used for coating the surface of food, and can be used for increasing gloss of food, and preventing breakage of food.

### [TECHNICAL SOLUTION]

One embodiment of the present application relates to a composition for coating a surface of food, comprising kestose.

Another embodiment of the present application relates to a sugar-coated food, whose surface is coated with the composition according to one embodiment of the present application.

The other embodiment of the present application relates to a method for coating a surface of food, comprising a step of coating a surface of food with the composition according to one embodiment of the present application.

The other embodiment of the present application relates to a method for preventing breakage of food, comprising a step of coating a surface of food with the composition according to one embodiment of the present application.

Hereinafter, the present application will be described in more detail.

One embodiment of the present application relates to a composition for coating a surface of food, comprising kestose.

The kestose that can be used in the present application may be used in either liquid or powder form and may be comprised in the composition according to the present application in various contents.

The kestose may be used as kestose alone or a sugar composition comprising thereof and may be used in either liquid or powder form, and the powder may be non-crystalline or crystalline. The kestose may be used by purchasing a commercial product or may be used by preparing it using specified raw materials.

In the sugar composition comprising the kestose, the kestose in a liquid or powder form may be provided as a composition, for example, fructooligosaccharide, which has a content of 50(w/w)% or more, 60(w/w)% or more, 70(w/w)% or more, 80(w/w)% or more, or 85(w/w)% or more based on the total sugar solids. In addition, the kestose in a crystalline form may be kestose crystals having a content of 90% or more, 95% or more, or 98% or more.

The composition comprising kestose may be fructooligosaccharide (FOS). For example, it may comprise a high content of 1-kestose (GF2) and further comprise at least one sugar selected from the group consisting of nystose (GF3) and 1-F-Fructosyl nystose (GF4). FOS consists of linear chains having 1 to 9 fructose residues linked to sucrose molecules by β2→1 bonds. For example, the kestose-containing fructooligosaccharide may have a high content of 1-kestose and may have 1-kestose as a main component. As one embodiment, the composition comprising kestose may comprise 1-kestose of 50wt% or more, 60wt% or more, 70wt% or more, 80wt% or more, 90wt% or more, or 95wt% or more based on the sugar solid content.

The kestose or composition comprising kestose available for the present application is not particularly limited, and it may be commonly prepared using an enzyme having kestose conversion activity or a microorganism producing the enzyme with sucrose as a substrate. The prepared kestose-containing product may be used as it is, or a sugar composition with an increased kestose content by performing a process of extraction and purification may be used.

The enzyme having kestose conversion activity is an enzyme having activity to convert a substrate comprising sucrose into fructooligosaccharide comprising kestose, and for example, it may be an enzyme derived from one or more selected from the group consisting of Aspergillus niger strain, Pichia farinose strain, Yarrowia lipolytica, Millerozyma farinose, and Aspergillus oryzae strain.

The food to which the composition according to one embodiment of the present application is applicable may include foods that are typically surface-coated, without limitation. The food may have a hardness at a certain level or higher, which allows for surface coating, for example, the hardness mat range from 100 to 3,000 (g), 100 to 2,000 (g), 100 to 1,000 (g), 100 to 800 (g), 300 to 3,000 (g), 300 to 2,000 (g), 300 to 1,000 (g), or 300 to 800 (g).

The food, for example, may be one or more selected from the group consisting of processed grain foods, processed nuts and fruit chips.

The processed grain foods may be, for example, foods obtained by fermenting grains. More specifically, the processed grain foods may be foods obtained by fermenting grains followed by compression molding. For example, the processed grain foods may be snacks or cereal.

The snacks may be, for example, confectionery, crackers, biscuits, cookies, bars, or the like. The cereal is food whose main ingredients are grain such as corn, wheat, rice, and the like, and may be enriched with nutrients such as vitamins and minerals and the like, and includes those prepared by adding vegetables, fruits, nuts, or the like as needed.

The processed nuts refer to processed products which are obtained by simply processing nuts such as peanuts, almonds, and the like, or processing by adding food or food additives thereto, and for example, may be almonds, peanuts, or the like.

The fruit chips may be cranberry chips, blueberry chips, or the like.

The composition according to one embodiment of the present application may be used to prevent breakage of food. In the present description, "breakage" refers to that food subjected to physical impact is split into two or more pieces. In the Example of the present application, as a result of measuring fragility of food coated with the composition according to one embodiment of the present application, breakage due to impact was significantly reduced, compared to food coated with sucrose. Specifically, as a result of observing the degree of breakage by applying impact to the food whose surface was coated with the composition according to one embodiment of the present application, the number of samples broken by the impact was significantly reduced, and also, the size of the broken fragments was smaller.

For example, the food whose surface is coated with the composition according to one embodiment of the present application may have fragility of 90% or less, 85% or less, 82% or less, 80% or less, 75% or less, 70% or less, or 66% or less, compared to the food whose surface is coated with sucrose. The fragility may be measured by a ratio (%) of broken samples after dropping samples from a height of 3m onto a marble floor.

The composition according to one embodiment of the present application may be for increasing gloss of food. In the Example of the present application, as a result of analyzing the chromaticity of food whose surface was coated with the composition according to one embodiment of the present application, the glossiness was exhibited high compared to food whose surface was coated with sucrose. Specifically, when the surface of food was coated with sucrose, transparency was decreased due to high crystallinity of sucrose, and when the surface of food was coated with the composition according to one embodiment of the present application, it had a transparent and highly glossy appearance.

For example, the food whose surface was coated with the composition according to one embodiment of the present application may have (1) an L value measured with an absorptiometer of 48 or less, 47 or less, 46 or less, or 45 or less (at this time, the lower limit may be 30 or more, 35 or more, 40 or more, 41 or more, 42 or more, 43 or more, 43.5 or more, or 44 or more), (2) an a value measured with an absorptiometer of 9.5 or more, 10 or more, 10.5 or more, 11 or more, or 11.1 or more (at this time, the upper limit may be 20 or less, 19 or less, 18 or less, 17 or less, 16 or less, 15 or less, 14 or less, 13 or less, 12 or less, or 11.5 or less), or (3) a b value measured with an absorptiometer of 13.5 or more, 14 or more, 15 or more, 16 or more, 17 or more, more than 17.01, or 17.5 or more (at this time, the upper limit may be 30 or less, 25 or less, 24 or less, 23 or less, 22 or less, 21 or less, 20 or less, 19 or less, 18 or less, or less than 17.9).

The composition according to one embodiment of the present application may be used for preventing overcoating. In the present Example, even though coating was conducted under the same conditions, as a result of analyzing the coating weight of food whose surface was coated with the composition according to one embodiment of the present application, the coating weight was lower compared to the food whose surface was coated with sucrose, and thus, it is possible to prevent overcoating of food, and prepare light and non-dull food.

The composition according to one embodiment of the present application may be used for improving surface roughness of food. In the Example of the present application, even though coating was conducted under the same conditions, as a result of observing the surface of food whose surface was coated with the composition according to one embodiment of the present application, the surface was smooth and excellent coating was shown compared to the food whose surface was coated with sucrose, and thus, it is possible to improve the surface roughness of food, and prepare food with an excellent appearance.

The food whose surface is coated with the composition according to one embodiment of the present application may increase a hardness by coating, but it may have a hardness increase rate lower than a hardness increase rate by sucrose coating. For example, the food whose surface is coated with the composition according to one embodiment of the present application may have a hardness increase rate (%) of more than 0%, 3% or more, 5% or more, or 8% or more compared to the food whose surface is not coated, and at this time, the upper limit of the hardness increase rate may be 100% or less, 90% or less, 80% or less, 70% or less, 60% or less, 50% or less, 40% or less, 30% or less, 20% or less, 15% or less, or 10% or less. As one embodiment, the food whose surface is coated with the composition according to one embodiment of the present application may have a hardness increase rate (%) of 3 to 50% compared to food that is not coated on the surface. The hardness increase rate (%) may be calculated by (hardness value of sample after coating - hardness value of sample before coating)/(hardness value of sample before coating) X 100(%).

As one embodiment, the food whose surface is coated with the composition according to one embodiment of the present application may have a hardness of 100 to 1,600 (g), 100 to 1,500 (g), 100 to 1,400 (g), 100 to 1,300 (g), 100 to 1,200 (g), 100 to 1,100 (g), 100 to 1,000 (g), 100 to 950 (g), 100 to 900 (g), 200 to 1,600 (g), 200 to 1,500 (g), 200 to 1,400 (g), 200 to 1,300 (g), 200 to 1,200 (g), 200 to 1,100 (g), 200 to 1,000 (g), 200 to 950 (g), 200 to 900 (g), 300 to 1,600 (g), 300 to 1,500 (g), 300 to 1,400 (g), 300 to 1,300 (g), 300 to 1,200 (g), 300 to 1,100 (g), 300 to 1,000 (g), 300 to 950 (g), 300 to 900 (g), 400 to 1,600 (g), 400 to 1,500 (g), 400 to 1,400 (g), 400 to 1,300 (g), 400 to 1,200 (g), 400 to 1,100 (g), 400 to 1,000 (g), 400 to 950 (g), 400 to 900 (g), 500 to 1,600 (g), 500 to 1,500 (g), 500 to 1,400 (g), 500 to 1,300 (g), 500 to 1,200 (g), 500 to 1,100 (g), 500 to 1,000 (g), 500 to 950 (g), 500 to 900 (g), 600 to 1,600 (g), 600 to 1,500 (g), 600 to 1,400 (g), 600 to 1,300 (g), 600 to 1,200 (g), 600 to 1,100 (g), 600 to 1,000 (g), 600 to 950 (g), 600 to 900 (g), 700 to 1,600 (g), 700 to 1,500 (g), 700 to 1,400 (g), 700 to 1,300 (g), 700 to 1,200 (g), 700 to 1,100 (g), 700 to 1,000 (g), 700 to 950 (g), 700 to 900 (g), 800 to 1,600 (g), 800 to 1,500 (g), 800 to 1,400 (g), 800 to 1,300 (g), 800 to 1,200 (g), 800 to 1,100 (g), 800 to 1,000 (g), 800 to 950 (g), or 800 to 900 (g).

The composition according to one embodiment of the present application may be coated on the surface of the food by 5 to 50 parts by weight, 5 to 40 parts by weight, 5 to 30 parts by weight, 5 to 25 parts by weight, 5 to 24 parts by weight, 10 to 50 parts by weight, 10 to 40 parts by weight, 10 to 30 parts by weight, 10 to 25 parts by weight, 10 to 24 parts by weight, 15 to 50 parts by weight, 15 to 40 parts by weight, 15 to 30 parts by weight, 15 to 25 parts by weight, or 15 to 24 parts by weight based on 100 parts by weight of food.

The moisture content of the food whose surface is coated with the composition according to one embodiment of the present application may be 0.5 to 5wt%, 0.5 to 4wt%, 0.5 to 3wt%, 0.5 to 2.5wt%, 1 to 5wt%, 1 to 4wt%, 1 to 3wt%, 1 to 2.5wt%, 1.5 to 5wt%, 1.5 to 4wt%, 1.5 to 3wt%, 1.5 to 2.5wt%, 2 to 5wt%, 2 to 4wt%, 2 to 3wt%, or 2 to 2.5wt%.

Another embodiment of the present application relates to a method for coating a surface of food, comprising a step of coating a surface of food with the composition according to one embodiment of the present application. The composition is the same as described above.

Another embodiment of the present application relates to a method for preventing breakage of food, comprising a step of coating a surface of food with the composition according to one embodiment of the present application. The composition, the food, and the breakage are the same as described above.

### [ADVANTAGEOUS EFFECTS]

According to one embodiment of the present application, the composition can prevent breakage, provide a smooth and highly glossy appearance, prevent overcoating, and provide a soft texture of food, by coating its surface.

### [BRIEF DESCRIPTION OF THE DRAWINGS]

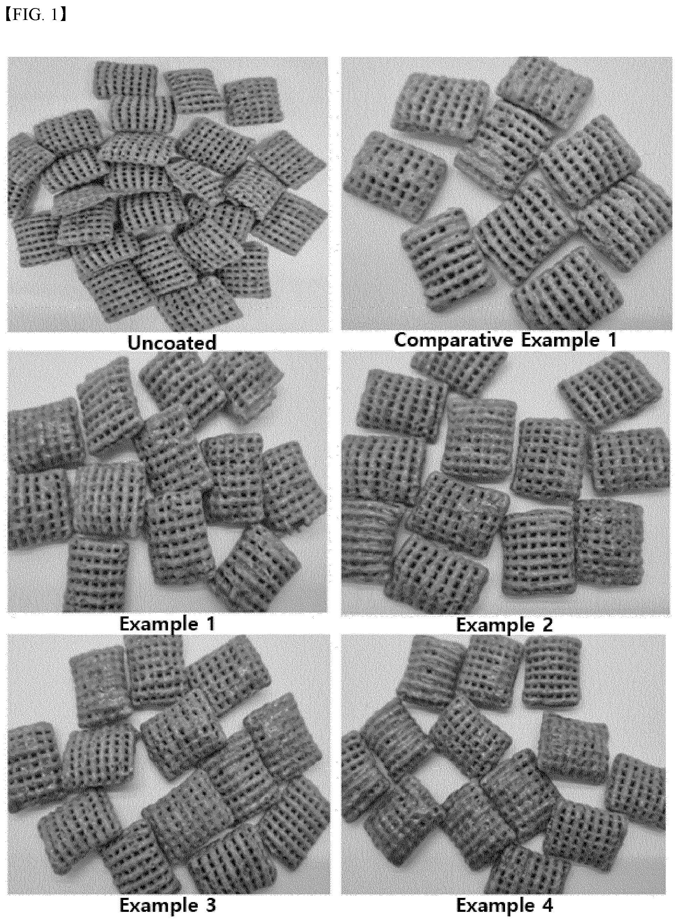

FIG. 1 is a drawing which shows the appearance of cereal coated with the coating composition according to one embodiment of the present application.

### [MODE FOR INVENTION]

Hereinafter, the present application will be described in more detail by the following Examples. However, these Examples are intended to illustrate the present application only, but the scope of the present application is not limited by these Examples.

### Example 1: Surface coating using coating composition

According to the weight ratio of Table 1 below, a sugar solution of 82 Brix was prepared by mixing sucrose and kestose with purity of 85wt% (Samyang corporation) and adding water. As an example of food for coating a surface, cereal with a hardness of 790(g) was prepared and the weight before coating was measured, and a coating solution was sprayed onto the surface of the cereal surface at a ratio of 70wt% cereal and 30wt% coating composition. After coating the surface of the cereal, it was dried in a 100°C drier for 15 minutes. The final moisture content of the coated cereal was 2.5wt%. After cooling at a room temperature, the weight of the coated cereal was measured. The appearance of the coated cereal was shown in FIG. 1.

**[Table 1]**

| Name of raw material | Comparative Example 1 | Example 1 | Example 2 | Example 3 | Example 4 |
|---|---|---|---|---|---|
| Sucrose (wt%) | 100 | 70 | 50 | 30 | 0 |
| Kestose (wt%) | 0 | 30 | 50 | 70 | 100 |

### Example 2: Hardness analysis

For each coated product in Example 1, the hardness was measured with a Texture Analyzer (TA-XT plus), and the maximal peak numerical value was shown in Table 2. The hardness measurement conditions were as follows:
- probe: P/36R
- speed at which the probe descends to the sample (pre-test speed): 1mm/sec
- speed at which the probe touches the surface of the sample and then penetrates the sample (test speed): 2mm/sec
- speed at which the probe penetrates the sample and then returns to its original position (post-test speed): 10mm/sec
- target mode of the probe (target mode): distance
- distance at which the probe recognizes the surface of the sample and penetrates the sample (distance): 8mm
- condition for the probe to recognize the sample (trigger type): force
- Minimum force for the probe to recognize the presence of the sample (trigger force): 5g

**[Table 2]**

| Sample | Hardness (g) |
|---|---|
| Noncoated sample | 790 |
| Comparative Example 1 | 1620 |
| Example 1 | 1460 |
| Example 2 | 1253 |
| Example 3 | 986 |
| Example 4 | 869 |

As shown in Table 2, when coated with the coating composition comprising kestose, the hardness was lowered as the kestose content increased, and when eating, a soft and chewy texture of food in the mouth can be provided.

### Example 3. Coating weight analysis

The difference between the weight of the cereal before coating and the weight of the coated cereal measured in Example 1 was calculated, and the coating weight was described in Table 3.

**[Table 3]**

| Sample | Coating weight (%) |
|---|---|
| Comparative Example 1 | 24.550 % |
| Example 1 | 18.090 % |
| Example 2 | 20.200 % |
| Example 3 | 21.090 % |
| Example 4 | 21.550 % |

As shown in Table 3, in case of kestose coating, the coating weight of food was lower compared to sucrose, allowing for the production of lighter food and for preparing a non-dull food. In case of coating with 100% sucrose in Comparative Example 1, a problem in that the surface of the food was rough and uneven occurred according to the crystallization of sucrose, but in case of coating comprising kestose, the surface was smooth and glossy.

### Example 4. Chromaticity analysis

The L, a, b values of each coated cereal prepared in Example 1 were measured using an absorptiometer and shown in Table 4. In addition, the appearance of each cereal shown in FIG. 1 was observed by naked eyes.

**[Table 4]**

| Name of raw material | L | a (Redness) | b (yellowness) |
|---|---|---|---|
| Comparative Example 1 | 48.16 | 9.18 | 13.49 |
| Example 1 | 41.81 | 11.05 | 16.87 |
| Example 2 | 42.55 | 10.93 | 17.01 |
| Example 3 | 43.08 | 11.03 | 17.9 |
| Example 4 | 44.68 | 11.4 | 17.86 |

As shown in Table 4 and FIG. 1, the sample of Comparative Example 1 exhibited non-transparent white color due to crystallization, and thus, the L value was shown high, and the samples of Examples 1 to 4 had high glossiness compared to Comparative Example 1, and thus, the a value and b value were shown high.

### Example 5. Fragility analysis

The coated samples manufactured in Example 1 were prepared in sets of 100 each, and dropped from a height of 3m onto a marble floor, and then the number of broken samples was counted to measure the breakage ratio. The experiment was repeated 3 times, and the average value of the breakage ratio was shown in Table 5. In addition, the weight by size of the broken fragments was measured and shown in Table 6.

**[Table 5]**

| Sample | Breakage ratio (%) |
|---|---|
| Comparative example 1 | 32 |
| Example 1 | 26 |
| Example 2 | 23 |
| Example 3 | 20 |
| Example 4 | 21 |

**[Table 6]**

| Sample | 5mm or less | 5~10mm | 10~15mm | 15~20mm | Total |
|---|---|---|---|---|---|
| Comparative Example 1 | 14.75% | 22.23% | 30.12% | 32.90% | 100% |
| Example 1 | 8.50% | 12.50% | 32.07% | 46.73% | 100% |
| Example 2 | 5.50% | 7.80% | 34.10% | 52.60% | 100.00% |
| Example 3 | 2.30% | 7.70% | 41.55% | 48.45% | 100.00% |
| Example 4 | 0.00% | 2.70% | 35.45% | 61.85% | 100.00% |

As shown in Table 5 and Table 6, the sample of Comparative Example 1, which had its surface coated with sucrose, exhibited a breakage of 32%, and the size of the broken fragments was also small. Therefore, when using a vertical packaging machine that drops vertically during production, frequent breakage occurred, leading to a decrease in product quality. In contrast, the samples of Examples 1 to 4, which comprise kestoes in coating, showed a significant improvement in fragility as the kestose content increase. And the sample coated with 100% kestoes in Example 4 did not have any fragments smaller than 5 mm, and it was confirmed that even if breakage occurred, only minimal damage occurred. Therefore, the coating composition according to one embodiment of the present application can significantly improve damage to food.

## Claims

1. A composition for coating a surface of food, comprising kestose.

2. The composition according to claim 1, wherein the composition has one or more characteristics of the following (1) to (4):
(1) a composition for increasing gloss of food,
(2) a composition for preventing breakage of food,
(3) a composition for preventing overcoating of food, and
(4) a composition for improving surface roughness of food.

3. The composition according to claim 1, wherein the composition is coated on the surface of the food in an amount of 5 to 50 parts by weight based on 100 parts by weight of food.

4. The composition according to claim 1, wherein the food is one or more selected from the group consisting of processed grain foods, processed nuts, and fruit chips.

5. The composition according to claim 4, wherein the processed grain foods are obtained by fermenting grain.

6. The composition according to claim 4, wherein the processed grain foods are obtained by fermenting grains and compression molding.

7. The composition according to claim 4, wherein the processed grain foods are snacks or cereal.

8. The composition according to claim 7, wherein the snacks are one or more selected from the group consisting of confectionery, crackers, Korean traditional sweets, biscuits, wafers, cookies, and bars.

9. The composition according to claim 1, wherein the food has a hardness of 100 to 3,000 (g).

10. A sugar-coated food, wherein the surface is coated with the composition according to any one of claims 1 to 9.

11. The food according to claim 10, wherein the hardness of the food is increased by 3 to 100% compared to a food of which surface is not coated.

12. The food according to claim 10, wherein the moisture content of the food is 0.5 to 5 wt%.

13. The food according to claim 10, wherein the food has an L value of 48 or less, an a value of 9.5 or more, or a b value of 13.5 or more.

14. The food according to claim 10, wherein the food has fragility of 90% or less compared to a food of which surface is coated with sucrose.

15. The food according to claim 10, wherein the food is one or more selected from the group consisting of processed grain foods, processed nuts, and fruit chips.

16. The food according to claim 15, wherein the processed grain foods are snacks or cereal.

17. The food according to claim 16, wherein the snacks are one or more selected from the group consisting of confectionery, crackers, Korean traditional sweets, biscuits, wafers, cookies, and bars.

18. A method for coating a surface of food, comprising a step of coating a surface of food with the composition according to any one of claims 1 to 9.

19. A method for preventing breakage of food, comprising a step of coating a surface of food with the composition according to any one of claims 1 to 9.
